# EUROPÄISCHE PATENTANMELDUNG

(11) **EP 1 475 320 A2**
(43) Veröffentlichungstag der Anmeldung: **10.11.2004**
(21) Anmeldenummer: 04009271.0
(22) Anmeldetag: 20.04.2004
(51) Int. Cl.: B65G 1/04

(54) **Container für eine Produktionsstätte zur Fertigung von individuellen Brillengläsern**

(30) Priorität: 02.05.2003 DE 10319944
(71) Anmelder: LOH ENGINEERING AG, CH-4702 Oensingen (CH)
(72) Erfinder: Lack, Oswin, 35625 Hüttenberg (DE)
(74) Vertreter: Oppermann, Mark, Dipl.-Ing.

(57) **Zusammenfassung**

Es wird ein Container (10) für eine Produktionsstätte (12) zur Fertigung von individuellen Brillengläsern (L) nach Rezept, kurz Rezeptwerkstatt, offenbart, die eine Mehrzahl von Arbeitsstationen (A-H) aufweist, zwischen denen die Brillengläser (L) mittels Transportkästen (K) transportierbar sind, welche jeweils zur Aufnahme eines rechten und eines linken Brillenglases (L) sowie ggf. zugehöriger Bearbeitungswerkzeuge ausgebildet sind. Erfindungsgemäß ist der Container (10) zur Aufnahme einer Mehrzahl von Transportkästen (K) ausgebildet, um diese zwischen wenigstens zwei Arbeitsstationen (A-H) der Rezeptwerkstatt zu transportieren, wobei der Container (10) eine Einlager- und Ausgabeeinrichtung (14) für die Transportkästen (K) aufweist, mittels der die Transportkästen (K) in den Container (10) einlagerbar sind und wahlweise ein bestimmter Transportkasten (K) aus dem Container (10) ausgebbar ist. Die Erfindung umfaßt auch die Verwendung des erfindungsgemäßen Containers (10) in einer Rezeptwerkstatt. Im Ergebnis wird ein Logistiksystem für eine Rezeptwerkstatt geschaffen, mittels dessen ein optimierter Materialfluß der Transportkästen (K) flexibel und weitestgehend unabhängig von der Größe der Rezeptwerkstatt und deren baulichen Gegebenheiten gewährleistet werden kann.

## Beschreibung

Die vorliegende Erfindung bezieht sich auf einen Container für eine Produktionsstätte zur Fertigung von individuellen Brillengläsern nach Rezept gemäß dem Oberbegriff des Patentanspruchs 1. Die Erfindung hat auch ein Verfahren zur Fertigung von individuellen Brillengläsern nach Rezept gemäß dem Oberbegriff des Patentanspruchs 15 zum Gegenstand.

Die Arbeits- bzw. Bearbeitungsstationen in Produktionsstätten zur Fertigung von individuellen Brillengläsern aus den gebräuchlichen Materialien (Polycarbonat, Mineralglas, CR 39, HI-Index, etc.) nach Rezept, auch Rezeptwerkstätten genannt, sind üblicherweise zu einem hohen Grad automatisiert, wobei Transportkästen als Transportmedium innerhalb der Fertigung dienen. Diese Transportkästen, auch Rezeptkästen oder "Job-trays" genannt, sind z.B. Gegenstand der deutschen Norm DIN 58763.

In den Transportkästen sind jeweils das rechte und das linke Brillenglas eines Auftrags und ggf. das zugehörige Feinschleifoder Polierwerkzeug für das jeweilige Brillenglas aufgenommen. Darüber hinaus besitzt ein derartiger Transportkasten ein Fach für den schriftlichen, werksinternen Auftrag. Dieser trägt in der Regel eine Markierung in Form eines Strichcodes od.dergl. Vielfach sind die Transportkästen selbst auch mit sogenannten "Transpondern", d.h. Halbleiterelementen zum Speichern und Senden von Informationen ausgerüstet, mit deren Hilfe eine Identifikation des jeweiligen Auftrags und des aktuellen Bearbeitungszustands der Brillengläser möglich ist.

Mittels der Transportkästen müssen Brillengläser aus verschiedenen Materialien unterschiedlichen Arbeitsstationen bzw.

Maschinen zugeführt werden, an denen die Brillengläser mit unterschiedlichen Hilfs- und Betriebsstoffen (z.B. Poliermittel, Polierpads) sowie unterschiedlichen Prozeßparametern bearbeitet werden. In der Regel werden bei der Fertigung von individuellen Brillengläsern nach Rezept die folgenden Prozeßschritte durchlaufen:
(A) Entnehmen eines geeigneten rechten und linken Brillenglasrohlings aus einem Halbfabrikatlager und Ablegen in einem Transportkasten ("Blank Picking"). Halbfabrikat insofern, als die in einer Draufsicht gesehen in der Regel runden oder ovalen, noch nicht gerandeten Brillenglasrohlinge bereits an einer ihrer jeweils zwei optisch wirksamen Flächen fertigbearbeitet sind.
(B) Sodann werden die Brillenglasrohlinge für den Blockvorgang vorbereitet, nämlich durch Aufbringen einer geeigneten Schutzfolie ("Taping") oder eines geeigneten Schutzlacks ("Protective Lacquering") zum Schutz der bereits fertigbearbeiteten optisch wirksamen Fläche.
(C) Als nächstes erfolgt das sogenannte "Blocken" der Brillenglasrohlinge ("Blocking"). Hierbei wird jeder Brillenglasrohling mit einem geeigneten Blockstück, z.B. einem Blockstück gemäß der deutschen Norm DIN 58766 verbunden. Dazu wird das Blockstück zunächst in eine vorgegebene Position gegenüber der geschützten, bereits fertigbearbeiteten Fläche des Brillenglasrohlings gebracht und in dieser Position sodann der Raum zwischen Blockstück und Brillenglasrohling mit geschmolzenem Material (Wood-Metall oder Wachs) ausgefüllt.
(D) Nach dem Blockvorgang ist zum Erstarren des Füllmaterials eine Abkühlphase vorgesehen. Nach der Erstarrung des Füllmaterials stellt das Blockstück eine Aufnahme zur Bearbeitung des jeweiligen Brillenglasrohlings dar.
(E) Erst dann können die Brillenglasrohlinge je nach Werkstoff mittels Schleifen, Fräsen oder Drehen vorbearbeitet werden ("Generating"), wobei die vorher noch nicht bearbeitete optisch wirksame Fläche des jeweiligen Brillenglasrohlings ihre Makrogeometrie gemäß Rezept erhält.
(F) Spätestens nach dieser Vorbearbeitung wird dem Transportkasten das entsprechende Formwerkzeug zum Feinschleifen bzw. zum Polieren des jeweiligen Brillenglases beigelegt ("Tool Picking").
(G) Sodann erfolgt die Feinbearbeitung der Brillengläser ("Finishing"), bei der die vorbearbeitete optisch wirksame Fläche des jeweiligen Brillenglases die gewünschte Mikrogeometrie erhält. In Abhängigkeit von u.a. dem Werkstoff der Brillengläser unterteilt sich die Feinbearbeitung in einen Feinschleifvorgang und einen sich daran anschließenden Poliervorgang, oder beinhaltet, falls bei der Vorbearbeitung bereits eine polierfähige Fläche erzeugt wurde, lediglich einen Poliervorgang.
(H) Nach dem Poliervorgang wird jedes Brillenglas vom jeweiligen Blockstück getrennt ("De-Blocking").
(I) Zuletzt schließen sich an Reinigungsschritte und ggf. weiterführende Veredelungsschritte, z.B. eine Entspiegelung oder Hartbeschichtung der Brillengläser.

Die zuvor beschriebenen Prozeßschritte werden üblicherweise in einem weitgehend automatisierten Betrieb durchlaufen, nach dem Prinzip des "first in/first out", bei dem ein Transportkasten, der zuerst an einer Arbeitsstation ankommt, diese auch zuerst wieder verläßt. Dabei sind die Arbeitsstationen über Transportbänder, Querrolleinrichtungen zum Querausschleusen aus dem Materialfluß, Hubeinrichtungen, Weichen und dergl. fest miteinander vernetzt. Lediglich für die Abkühlphase nach dem Blocken werden geeignete Pufferzonen vorgehalten, etwa in Form von automatisierten Regalen mit Knickarmroboter oder Linearantrieben, in denen die Transportkästen auf ihre Weiterverarbeitung warten.

Ein Nachteil der starren Verkettung der Arbeitsstationen durch Bänder oder ähnliche Transporteinrichtungen für die Transportkästen wird insbesondere darin gesehen, daß diese stationären Transporteinrichtungen individuell an die Größe der Rezeptwerkstatt und deren bauliche Gegebenheiten angepaßt sein müssen. Änderungen des einmal vorgegebenen Materialflusses, etwa wenn zur Kapazitätserweiterung oder zur Bearbeitung von Brillengläsern aus anderen Materialien weitere Arbeitsstationen, z.B. neue oder andere Bearbeitungsmaschinen eingesetzt werden sollen, sind stets mit einem erheblichen Aufwand verbunden.

Die Alternative eines manuellen Transports der Transportkästen hingegen, bei dem die Transportkästen gestapelt und von einer Person von einer Arbeitsstation zur nächsten Arbeitsstation getragen werden, hat insbesondere die Nachteile, daß sie sehr personal- und damit kostenintensiv und einhergehend mit einer hohen Belastung des Personals auch gefahrenträchtig ist.

Zwar sind aus dem Stand der Technik separate Vorrichtungen zum Zuliefern von Gegenständen (z.B. DE 34 24 988 A1), bei denen die Gegenstände in übereinander gestapelten Kisten aufgenommen oder auf übereinander gestapelten Böden abgelegt werden, einzelne Vorrichtungen zum Aufnehmen und Abführen von Auffangkästen für losweise zu sammelnde Serienteile (z.B. DE 41 21 844 C2), bei denen zwischen Endlosfördermitteln in Umlaufrichtung aufeinanderfolgend Konsolen mit horizontalen Aufstandsflächen für die Aufnahme der Auffangkästen vorgesehen sind, als auch separate Werkstückzwischenspeicher (z.B. DE 197 49 396 A1) mit paternosterartig geführten Aufnahmewannen für in taktmäßigen Abständen ankommende Werkstücke bekannt, diese sind jedoch für die Zwecke einer Rezeptwerkstatt, d.h. einer Produktionsstätte zur Fertigung von individuellen Brillengläsern nicht geeignet, vielmehr lediglich für Serien- bzw. Massenteile.

Der Erfindung liegt die Aufgabe zugrunde, ein Logistiksystem zu schaffen, mittels dessen ein möglichst optimaler Materialfluß der Transportkästen in einer Rezeptwerkstatt flexibel und weitestgehend unabhängig von der Größe der Rezeptwerkstatt und deren baulichen Gegebenheiten gewährleistet werden kann.

Diese Aufgabe wird durch die im Patentanspruch 1 bzw. 15 angegebenen Merkmale gelöst. Vorteilhafte und/oder zweckmäßige Weiterbildungen der Erfindung sind Gegenstand der Patentansprüche 2 bis 14.

Gemäß einem Aspekt der Erfindung ist ein Container für eine Produktionsstätte zur Fertigung von individuellen Brillengläsern nach Rezept, welche eine Mehrzahl von Arbeitsstationen aufweist, zwischen denen die Brillengläser mittels Transportkästen transportierbar sind, die jeweils zur Aufnahme eines rechten und eines linken Brillenglases sowie ggf. zugehöriger Bearbeitungswerkzeuge ausgebildet sind, zur Aufnahme einer Mehrzahl von Transportkästen ausgebildet, um diese zwischen wenigstens zwei Arbeitsstationen der Produktionsstätte zu transportieren, wobei der Container eine Einlager- und Ausgabeeinrichtung für die Transportkästen aufweist, mittels der die Transportkästen in den Container einlagerbar sind und wahlweise ein bestimmter Transportkasten aus dem Container ausgebbar ist.

Nach einem weiteren Aspekt der Erfindung ist ferner ein Verfahren zur Fertigung von individuellen Brillengläsern nach Rezept in einer Produktionsstätte mit einer Mehrzahl von Arbeitsstationen vorgesehen, bei dem die Brillengläser ggf. zusammen mit zugehörigen Bearbeitungswerkzeugen zwischen den Arbeitsstationen mittels Transportkästen transportiert werden, welche jeweils zur Aufnahme eines rechten und eines linken Brillenglases sowie ggf. der zugehörigen Bearbeitungswerkzeuge ausgebildet sind, wobei die Transportkästen zwischen wenigstens zwei Arbeitsstationen der Produktionsstätte mittels eines erfindungsgemäßen Containers transportiert werden.

Mittels des erfindungsgemäßen Containers bzw. durch dessen erfindungsgemäße Verwendung in einer Rezeptwerkstatt können die z.B. aus der deutschen Norm DIN 58763 bekannten Transportkästen wahlweise einzeln oder im Satz auf einfache, personalschonende, kostengünstige, platzsparende und insbesondere sehr flexible Weise zwischen den einzelnen Arbeitsstationen der Rezeptwerkstatt transportiert werden, ohne daß der Transport größeren Beschränkungen aufgrund der Größe und/oder der baulichen Gegebenheiten der Rezeptwerkstatt unterliegen würde. Weil die Container hierbei mit einer Einlager- und Ausgabeeinrichtung für die Transportkästen ausgerüstet sind, mittels der die Transportkästen in den Container einlagerbar sind und wahlweise ein bestimmter Transportkasten aus dem Container ausgebbar ist, kann der Container wahlweise in einem "first in/first out"-Betrieb oder auch einem beliebigen anderen Betriebsmodus arbeiten, je nach dem wie es für einen optimierten Materialfluß erforderlich ist, so daß der Container sehr variabel bzw. multifunktional einsetzbar ist. Darüber hinaus entfällt beim Einsatz erfindungsgemäßer Container der bei den eingangs beschriebenen starren Fördersystemen erforderliche hohe individuelle Planungs-, Einrichtungs- und Änderungsaufwand. Im Ergebnis eignet sich der erfindungsgemäße Container insbesondere für Rezeptwerkstätten, die bisher wegen der beschriebenen Nachteile der starren Fördersysteme ihre Fertigung nicht automatisiert haben, die sich aufgrund der Größe und/oder baulichen Gegebenheiten ihres Werkstattbereichs Beschränkungen hinsichtlich des Einsatzes von konventionellen Fördersystemen ausgesetzt sehen, die bereits durchgängig starre Fördersysteme einsetzen, die Fertigung aber möglichst kostengünstig um weitere Arbeitsstationen erweitern wollen oder müssen, oder die bisher nur einen Bereich ihrer Fertigung automatisiert haben (oder dies zukünftig wollen), weil z.B. auch nicht oder nur schwer automatisierbare, ältere Bearbeitungsmaschinen (weiter) genutzt werden (sollen). Ein besonderer Vorteil des Einsatzes erfindungsgemäßer Container besteht hier auch darin, daß das Logistiksystem einer Rezeptwerkstatt leicht mit deren Ausstoß an Brillengläsern "mitwachsen" kann, indem einfach zusätzliche Container eingesetzt werden. Schließlich kann der erfindungsgemäße Container aufgrund seines modularen Charakters hervorragend standardisiert und/oder zum Gegenstand eines Container-Baukastensystems gemacht werden, was dazu beiträgt, die Kosten des Logistiksystems für eine Rezeptwerkstatt erheblich zu senken.

Vorzugsweise hat die Einlager- und Ausgabeeinrichtung des Containers einen Speicher für die Transportkästen. Bei dem Speicher kann es sich etwa um ortsfest im Container angebrachte Regalböden handeln, auf denen die Transportkästen mittels einer vorgelagerten Hubeinrichtung definiert ablegbar sind. Bevorzugt wird jedoch eine Ausgestaltung, bei der der Speicher durch einen Umlaufförderer ausgebildet ist, mittels dessen mehrere Aufnahmeböden für jeweils wenigstens einen Transportkasten paternosterartig im Kreis geführt sind.

Es ist ferner bevorzugt, wenn die Einlager- und Ausgabeeinrichtung des Containers eine Fördereinrichtung aufweist, mittels der ein Transportkasten von einer äußeren Position am Container in eine innere Endposition im Speicher des Containers und umgekehrt bewegt werden kann. Zweckmäßig kann hierbei die Fördereinrichtung einen Längsförderer haben, mittels dessen ein Transportkasten von der äußeren Position am Container in eine innere Zwischenposition im Container und umgekehrt bewegbar ist, sowie eine Greifereinrichtung, mittels der der Transportkasten von der inneren Zwischenposition im Container in die innere Endposition im Speicher des Containers und umgekehrt bewegt werden kann.

Des weiteren kann vorgesehen sein, daß die Einlager- und Ausgabeeinrichtung eine Erkennungseinrichtung aufweist, mittels der eine an jedem Transportkasten vorgesehene, den jeweiligen Transportkasten identifizierende Markierung erfaßbar ist. In einer einfachen Ausgestaltung kann die Erkennungseinrichtung lediglich eine Eingabemöglichkeit, etwa in Form einer Tastatur haben, über die Informationen betreffend die am Transportkasten vorgesehene Markierung, bei der es sich zum Beispiel um einen schriftlichen Fertigungsauftrag handeln kann, der zu Beginn der Rezeptfertigung in eine geeignete Aufnahme am Transportkasten eingesteckt wird, manuell eingegeben werden können. In einer bevorzugten Ausgestaltung des Containers handelt es sich bei der Erkennungseinrichtung jedoch um ein Lesegerät, mittels dessen eine Markierung in Form eines an jedem Transportkasten vorzugsweise lösbar angebrachten Strichcodes bevorzugt automatisch erfaßbar ist. Ein solcher Strichcode kann etwa auf dem schriftlichen Fertigungsauftrag von außen sichtbar aufgedruckt sein. Ferner ist hier denkbar, daß die Erkennungseinrichtung dazu angepaßt ist, einen am Transportkasten angebrachten, an sich bekannten "Transponder" als Kastenmarkierung zu erkennen, um den Transportkasten zu identifizieren bzw. Informationen betreffend den jeweiligen Fertigungsauftrag und/oder Bearbeitungszustand der im jeweiligen Transportkasten enthaltenen Brillengläser einzulesen.

In einer vorteilhaften Ausbaustufe kann der Container mit einer "Intelligenz" versehen sein, wozu der Container eine mit dem Speicher und der Fördereinrichtung wirkverbundene Steuereinrichtung aufweist, die ihrerseits mit der Erkennungseinrichtung wirkverbunden ist und in der mittels der Erkennungseinrichtung erfaßte Informationen betreffend die Markierung der Transportkästen abgespeichert werden können, wobei der Speicher und die Fördereinrichtung mittels der Steuereinrichtung angesteuert werden können, um auf entsprechende Anforderung hin unter Berücksichtigung der in der Steuereinrichtung abgespeicherten Informationen betreffend die Markierung der Transportkästen einen bestimmten Transportkasten aus dem Container auszugeben.

Wenn der Container darüber hinaus in einer vorteilhaften weiteren Ausbaustufe eine mit der Steuereinrichtung wirkverbundene Sende- und Empfangseinrichtung für eine Kommunikation bzw. einen Datentransfer zwischen dem Container einerseits und einer Arbeitsstation und/oder einem ggf. vorhandenen Host-Steuerungssystem der Rezeptwerkstatt andererseits aufweist, können zum einen auf einfache Weise Informationen betreffend die Markierung der Transportkästen und somit den jeweiligen Fertigungsauftrag zu Fertigungssteuerungszwecken an die jeweilige Arbeitsstation bzw. Bearbeitungsmaschine und/oder das Host-Steuerungssystem der Rezeptwerkstatt weitergeleitet werden. Zum anderen kann eine Arbeitsstation bzw. Bearbeitungsmaschine und/oder das Host-Steuerungssystem der Rezeptwerkstatt auf einfache Weise ein Anforderungssignal zur Ausgabe eines bestimmten Transportkastens an den Container senden. Grundsätzlich kann hierbei die Sende- und Empfangseinrichtung des Containers durch einen containerseitigen Stecker oder eine containerseitige Steckdose ausgebildet sein, der bzw. die mit einem komplementären Gegenstück an der Arbeitsstation bzw. der Bearbeitungsmaschine Kontakt schließt, wenn der Container in eine definierte Relativstellung zur Arbeitsstation bzw. Bearbeitungsmaschine gebracht wird. Insbesondere im Hinblick auf eine möglichst unkomplizierte Kommunikationsmöglichkeit zwischen dem Container und dem Host-Steuerungssystem der Rezeptwerkstatt bevorzugt ist jedoch eine Sende- und Empfangseinrichtung, die draht- bzw. kabellos z.B. per Funk oder Infrarot-Schnittstelle arbeitet.

Zweckmäßig kann der Container eine Signaleinrichtung für den Füllstand des Containers und/oder den Bearbeitungszustand der in den im Container aufgenommenen Transportkästen enthaltenen Brillengläser aufweisen, etwa in Form einer mehrfarbigen Meldeleuchte und/oder einer akustisch arbeitenden Meldeeinheit, so daß das Personal in der Rezeptwerkstatt schon aus der Ferne Informationen über den Zustand des Containers bzw. der darin gespeicherten oder transportierten Brillengläser erhalten kann.

Der Container kann in weiteren Ausbaustufen vorteilhaft eine oder mehrere weitere Funktionseinheiten aufweisen, die dazu dienen, auf die in den im Container aufgenommenen Transportkästen enthaltenen Brillengläser einzuwirken. So kann der Container mit einem Kühlaggregat ausgerüstet sein, um z.B. die Verweilzeit nach dem Blocken zu verkürzen, wobei vermittels der Kühlung die Erstarrung des Füllmaterials zwischen Blockstück und Brillenglasrohling beschleunigt werden kann. Ferner kann der Container eine Trocknungseinheit zur Trocknung der in den im Container aufgenommenen Transportkästen enthaltenen Brillengläser haben, womit beispielsweise der vor dem Blocken auf die bereits fertig bearbeitete, optisch wirksame Fläche aufgebrachte Schutzlack getrocknet werden kann, damit die Brillengläser schneller dem Blockvorgang zugeführt werden können. Die Trocknungseinheit kann hierbei ein Gebläse und/oder eine Heizung aufweisen.

Ferner ist es von Vorteil, wenn der Container eine eigene Energieversorgungseinheit für die im Container vorhandenen Energieverbraucher, etwa die Antriebe für den Speicher und/oder die Fördereinrichtung, die Erkennungs-, Steuer- und/oder Signaleinrichtungen sowie ggf. die weiteren Funktionseinheiten aufweist, so daß der Container autark ist und nicht über Versorgungsleitungen und/oder -kabel von außen versorgt werden muß. Zweckmäßig handelt es sich hierbei um eine elektrische Energieversorgungseinheit mit wenigstens einem Akkumulator, etwa einer Autobatterie. In diesem Fall ist es des weiteren vorteilhaft am Container elektrische Anschlußmöglichkeiten vorzusehen, über die der Container in Pufferzonen an eine externe Stromversorgung angeschlossen und/oder der Akkumulator geladen werden kann, so daß dieser nicht unnötig beansprucht bzw. zum Laden nicht ausgebaut werden muß.

Ist der Container schließlich mit einer Mehrzahl von Rädern oder Rollen ausgerüstet, so daß er rollbar ist, kann der Container problemlos von einer Person zu den verschiedenen Arbeitsstationen der Rezeptwerkstatt geschoben werden. Denkbar wäre hier in weiteren Ausbaustufen auch ein Eigenantrieb der Container, so daß die Container ferngesteuert von Arbeitsstation zu Arbeitsstation verfahrbar sind. Ebenfalls möglich sind Schienensysteme an Boden oder Decke der Rezeptwerkstatt, auf bzw. an denen die Container ggf. auch automatisch verfahrbar sind, wo es die baulichen Gegebenheiten der Rezeptwerkstatt gestatten und es trotz der bei Schienensystemen gegenüber einer freien Bewegbarkeit der Container eingeschränkten Flexibilität bei der Bewegung auch erwünscht ist.

Im folgenden wird die Erfindung anhand bevorzugter Ausführungsbeispiele unter Bezugnahme auf die beigefügten, teilweise schematischen Zeichnungen näher erläutert, wobei gleiche oder entsprechende Teile mit den gleichen Bezugszeichen versehen sind. In den Zeichnungen zeigen:
- Fig. 1: eine teilweise aufgebrochene, perspektivische Darstellung eines Containers zur Aufnahme und zum Transport der Rezeptkästen in einer Rezeptwerkstatt nach einem ersten Ausführungsbeispiel der Erfindung,
- Fig. 2: eine schematische Darstellung eines Containers zur Aufnahme und zum Transport der Rezeptkästen in einer Rezeptwerkstatt nach einem zweiten Ausführungsbeispiel der Erfindung, wobei der Container an einer ebenfalls nur schematisch gezeigten Bearbeitungsmaschine der Rezeptwerkstatt angedockt ist,
- Fig. 3: eine schematische Darstellung von zwei Containern zur Aufnahme und zum Transport der Rezeptkästen in einer Rezeptwerkstatt nach einem dritten Ausführungsbeispiel der Erfindung, wobei die Container an einer ebenfalls nur schematisch gezeigten Blockstation der Rezeptwerkstatt angedockt sind, und
- Fig. 4: das Layout einer Rezeptwerkstatt, in der erfindungsgemäße Container zum Transport der Rezeptkästen zwischen den einzelnen Arbeitsstationen der Rezeptwerkstatt verwendet werden.

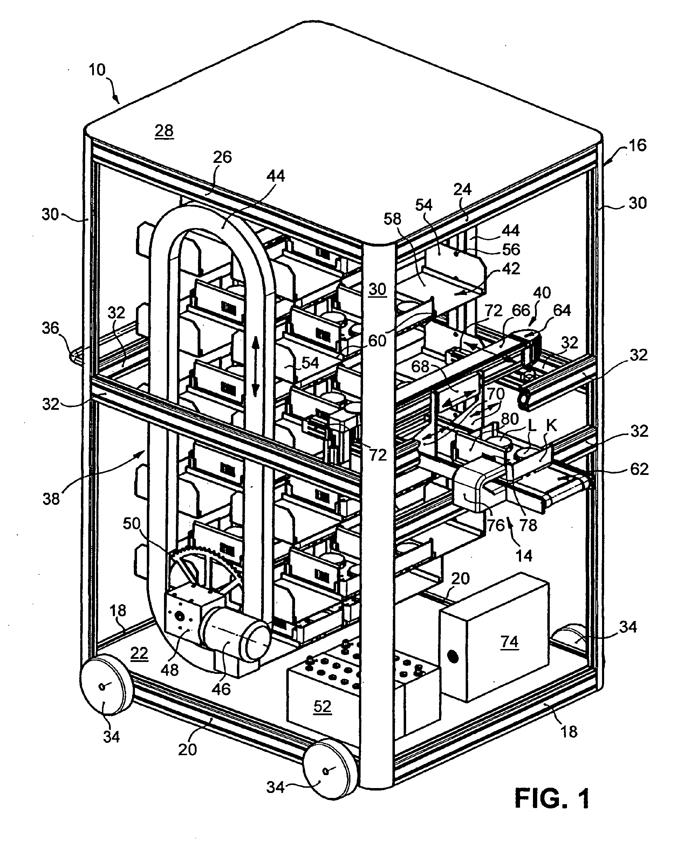

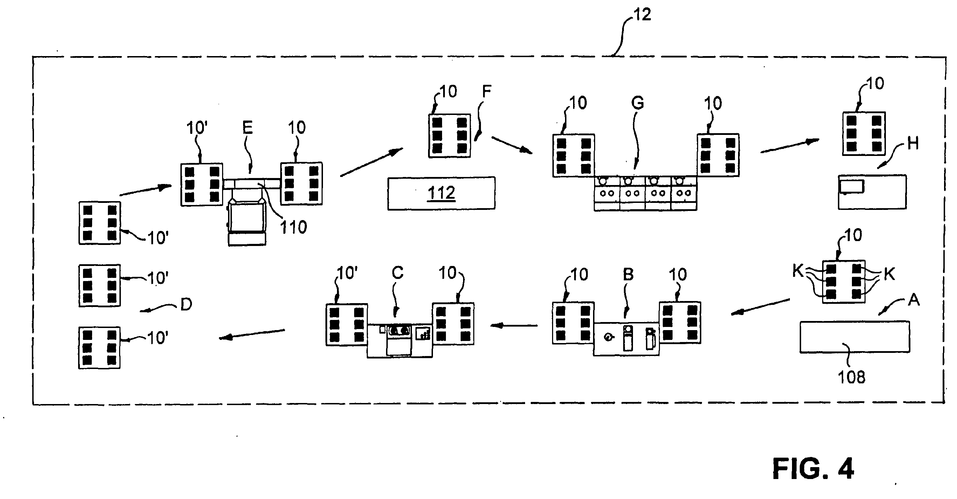

Die Fig. 1 bis 3 zeigen Einzelheiten von Containern 10 zur Verwendung in einer exemplarisch in Fig. 4 dargestellten Produktionsstätte zur Fertigung von individuellen Brillengläsern L nach Rezept, kurz Rezeptwerkstatt 12, welche eine Mehrzahl von eingangs bereits angesprochenen, an sich bekannten Arbeitsstationen A bis H und ggf. I aufweist. Zwischen den Arbeitsstationen A bis I werden die Brillengläser L mittels an sich bekannten Transportkästen K transportiert, wie sie beispielsweise in der deutschen Norm DIN 58763 beschrieben sind. Jeder Transportkasten K ist zur Aufnahme eines rechten und eines linken Brillenglases L sowie ggf. zugehöriger Bearbeitungswerkzeuge ausgebildet. Wesentlich ist, daß, wie nachfolgend noch näher beschrieben werden wird, der Container 10 zur Aufnahme einer Mehrzahl von Transportkästen K ausgebildet ist, um diese zwischen wenigstens zwei der Arbeitsstationen A bis I der Rezeptwerkstatt 12 zu transportieren, wobei der Container 10 eine Einlager- und Ausgabeeinrichtung 14 für die Transportkästen K aufweist, mittels der die Transportkästen K in den Container 10 eingelagert werden können und wahlweise ein bestimmter Transportkasten K aus dem Container 10 ausgegeben werden kann.

Gemäß Fig. 1 hat der Container 10 ein Grundgestell 16, welches fachwerkartig aus Rahmenprofilen zusammengesetzt ist, die vorzugsweise aus einer Aluminiumlegierung bestehen. Dabei wird der Boden des Containers 10 durch einen im wesentlichen rechteckigen unteren Rahmen bestehend aus einem vorderen und einem hinteren unteren Rahmenprofil 18 sowie zwei seitlichen unteren Rahmenprofilen 20 gebildet, in den eine hinreichend eigensteife, ebene Bodenplatte 22 aus z.B. Stahlblech fest eingesetzt ist. Die Decke des Containers 10 wird ihrerseits durch einen im wesentlichen rechteckigen oberen Rahmen gebildet, der aus einem vorderen und einem hinteren oberen Rahmenprofil 24 sowie zwei seitlichen oberen Rahmenprofilen 26 besteht und an dem eine hinreichend eigensteife, ebene Deckplatte 28 befestigt ist, die ebenfalls aus Stahlblech bestehen kann. Der Boden und die Decke des Containers 10 sind mittels vier Längsstreben 30 fest miteinander verbunden, wobei an jeder Ecke des oberen bzw. unteren Rahmens eine Längsstrebe 30 befestigt ist. Ferner ist das Grundgestell 16 etwa auf halber Höhe der Längsstreben 30 mittels Querstreben 32 ausgesteift, von denen seitlich und im hinteren Bereich des Containers 10 jeweils nur eine vorgesehen ist, während im vorderen Bereich des Containers 10 zwei in vertikaler Richtung beabstandete Querstreben 32 vorgesehen sind, die quasi ein Fenster für das Einlagern und Ausgeben der Transportkästen K in bzw. aus dem Container 10 begrenzen. Die obere der vorderen Querstreben 32 ist in Fig. 1 aufgebrochen dargestellt. Sämtliche Querstreben 32 verlaufen senkrecht zu den Längsstreben 30 und sind an diesen auf geeignete Weise befestigt. In Fig. 1 nicht dargestellt, um einen Einblick in den Container 10 zu ermöglichen, sind weitere Verkleidungsteile und Türen aus vorzugsweise Aluminiumblech oder Kunststoff, die an dem Grundgestell 16 für Montage- und Reparaturzwecke lösbar bzw. öffnungsfähig befestigt sind und das Innere des Containers 10 im fertig montierten Zustand des Containers 10 weitestgehend gegenüber der Umgebung abschirmen. Den jeweiligen Erfordernissen entsprechend sind die weiteren Verkleidungsteile und Türen ggf. isoliert und auf besondere Weise gegeneinander und gegenüber dem Grundgestell 16 abgedichtet, um erforderlichenfalls einen Einsatz des vom äußeren Erscheinungsbild her insgesamt im wesentlichen quaderförmigen Containers 10 in Reinraum-Umgebungen zu ermöglichen. In diesem Fall können auch Filter od.dergl. im Container 10 vorgesehen sein, die hier jedoch nicht dargestellt sind.

Im dargestellten Ausführungsbeispiel ist der Container 10 rollfähig ausgebildet, wozu vier Räder bzw. Rollen 34 vorgesehen sind, von denen jeweils zwei an jedem seitlichen unteren Rahmenprofil 20 drehbar angebracht sind, und zwar jeweils in einem vorderen und einem hinteren Bereich des jeweiligen seitlichen unteren Rahmenprofils 20. Bei den Rollen 34 kann es sich um handelsübliche Rollen handeln, z.B. solche mit einer mit einem Hartgummireifen bereiften Kunststoffnabe. Um den Container 10 von Hand bewegen zu können, ist auf der hinteren Seite des Containers 10 ein bügelförmiger Schiebe- oder Handgriff 36 befestigt, der sich auf Höhe der hinteren Querstrebe 32 und parallel dazu von Längsstrebe 30 zu Längsstrebe 30 erstreckt und an letzteren auf geeignete Weise befestigt ist.

Im Inneren des Containers 10 sind an dem Grundgestell 16 auf hier nicht näher gezeigte Weise ein Speicher 38 für die Transportkästen K und eine Fördereinrichtung 40, mittels der ein Transportkasten K von einer äußeren Position am Container 10 in eine innere Endposition im Speicher 38 des Containers 10 und umgekehrt bewegbar ist, als Bestandteile der Einlager- und Ausgabeeinrichtung 14 angebracht. Im dargestellten Ausführungsbeispiel ist der Speicher 38 durch einen Umlaufförderer ausgebildet, mittels dessen eine Mehrzahl von Aufnahmeböden 42 für jeweils wenigstens einen Transportkasten K, hier jeweils vier Transportkästen K paternosterartig im Kreis bzw. in einer Schleife geführt sind. Hierfür hat der Speicher 38 zu beiden Seiten der Aufnahmeböden 42 schleifenförmig umlaufende, sich fast über die gesamte Höhe des Containers 10 erstreckende Führungen 44 für die Aufnahmeböden 42, in denen die Aufnahmeböden 42 auf geeignete Weise, z.B. mittels eines nicht näher gezeigten Kettentriebs miteinander und mit einem Antrieb verbunden sind, von dem in Fig. 1 ein Antriebsmotor 46, ein Winkelgetriebe 48 sowie ein vom Antriebsmotor 46 über das Winkelgetriebe 48 wahlweise antreibbares Antriebsritzel 50 dargestellt sind. Bei dem Antriebsmotor 46 handelt es sich im dargestellten Ausführungsbeispiel um einen Elektromotor, der von einem auf der Bodenplatte 22 angeordneten Akkumulator 52 -- im dargestellten Ausführungsbeispiel durch zwei den jeweiligen Erfordernissen entsprechend parallel oder in Reihe geschaltete Autobatterien gebildet -- als Energieversorgungseinheit für die im Container 10 vorhandenen Energieverbraucher mit elektrischer Energie versorgt wird.

An jedem Längsende hat jeder Aufnahmeboden 42 eine Seitenflanke 54, an der ein Stift 56 od.dergl. befestigt ist, der seinerseits in der zugeordneten Führung 44 geführt und auf geeignete Weise mit dem hier nicht näher gezeigten Kettentrieb antriebsverbunden ist. Die Seitenflanken 54 jedes Aufnahmebodens 42 sind mittels einer hinreichend eigensteifen oder geeignet ausgesteiften Tragplatte 58 für die Transportkästen K verbunden, die sich unter Belassung eines ausreichenden Bauraums für die Antriebs- und Führungselemente des Speichers 38 fast über die gesamte Breite des Containers 10 erstreckt. Oben auf jeder Tragplatte 58 sind in regelmäßigen Abständen sich quer über die Tragplatte 58 erstreckende Führungsleisten 60 für die Transportkästen K angebracht. Die Abstände der Führungsleisten 60 untereinander bzw. zu den Seitenflanken 54 ergeben sich z.B. aus der deutschen Norm DIN 58763, die insbesondere die Abmessungen der Transportkästen K normt.

Die Fördereinrichtung 40 hat im dargestellten Ausführungsbeispiel einen horizontal ausgerichteten Längsförderer 62 in Form eines handelsüblichen, vorzugsweise elektrisch angetriebenen Förderbandes, welches sich zwischen den vorderen Querstreben 32 hindurch erstreckt, so daß ein Transportkasten K von einer äußeren Position am Container 10 in eine innere Zwischenposition im Container 10 und umgekehrt bewegt werden kann. Ferner weist die Fördereinrichtung 40 eine Greifereinrichtung 64 auf, die dazu dient, den Transportkasten K von der inneren Zwischenposition auf dem Längsförderer 62 im Container 10 in die innere Endposition im Speicher 38 des Containers 10 und umgekehrt zu bewegen.

Die Greifereinrichtung 64 hat im dargestellten Ausführungsbeispiel ein horizontales, parallel zu den vorderen Querstreben 32 des Grundgestells 16 und den Aufnahmeböden 42 ausgerichtetes Portal 66, welches durch eine handelsübliche, vorzugsweise elektrisch arbeitende Lineareinheit ausgebildet ist. Entlang des Portals 66 ist ein im Handel erhältlicher, vorzugsweise elektrischer Greiferantrieb 68 mit zwei parallelen Greifern 70 für die Transportkästen K entsprechend dem zugeordneten Doppelpfeil in Fig. 1 in horizontaler, d.h. seitlicher Richtung bewegbar. Die Greifer 70 können entsprechend den zugeordneten Doppelpfeilen in Fig. 1 zwangsgekoppelt aufeinander zu bzw. voneinander weg bewegt werden, um einen Transportkasten K zu fassen/klemmen bzw. diesen loszulassen. Ferner ist das Portal 66 an jedem seiner Längsenden auf jeweils einer handelsüblichen, vorzugsweise elektrisch arbeitenden Lineareinheit 72 aufgelagert. Mittels der sich parallel zueinander und zu den seitlichen Querstreben 32 des Grundgestells 16 in horizontaler Richtung erstreckenden Lineareinheiten 72 kann das Portal 66 und damit der Greiferantrieb 68 entsprechend dem dazugeordneten Doppelpfeil in Fig. 1 in horizontaler Richtung, d.h. zwischen zwei Endstellungen nach vorne bzw. hinten bewegt werden.

Auch die das Portal 66 bildende Lineareinheit, der Greiferantrieb 68 und die seitlichen Lineareinheiten 72 sowie der Längsförderer 62 werden von dem Akkumulator 52 mit elektrischer Energie versorgt. Der Antriebsmotor 46 des Speichers 38, mittels dessen die Aufnahmeböden 42 des Speichers 38 entsprechend dem zugeordneten Doppelpfeil in Fig. 1 vornehmlich in vertikaler Richtung bewegt werden können, sowie die Lineareinheiten 66, 72, der Greiferantrieb 68 und der Längsförderer 62 der Fördereinrichtung 40 sind über eine Steuereinrichtung 74 in Form eines PCs, der entsprechende Steuerungssteckkarten (SPS, CNC, etc.) aufweist und ebenfalls auf der Bodenplatte 22 des Grundgestells 16 angeordnet ist, steuerungstechnisch miteinander gekoppelt. Für den Fachmann ist ersichtlich, daß die Transportkästen K somit durch geeignetes horizontales Verfahren mittels der Fördereinrichtung 40 und unter einem geeigneten vertikalen Verfahren der Aufnahmeböden 42 im Speicher 38 an bestimmter Stelle auf einem bestimmten Aufnahmeboden 42 abgesetzt werden können. Gleichermaßen kann mittels der Fördereinrichtung 40 ein bestimmter Transportkasten K aus dem Speicher 38 herausgenommen und vom Container 10 abgegeben werden.

Als Elektroantriebe für den Speicher 38 und die Fördereinrichtung 40 können auch kostengünstige elektrische Antriebe aus dem Automobilbereich (Scheibenwischermotor, Fensterheberantriebe, etc.) verwendet werden, soweit dies technisch möglich ist. Denkbar, obgleich hier nicht gezeigt, ist ferner auch, daß ein kleiner Kompressor mit Druckspeicher im Container 10 vorgesehen ist, wodurch auch pneumatische Antriebe für den Speicher 38 und die Fördereinrichtung 40 eingesetzt werden könnten.

Gemäß Fig. 1 hat die Einlager- und Ausgabeeinrichtung 14 des Containers 10 des weiteren eine hier am Längsförderer 62 der Fördereinrichtung 40 angeordnete Erkennungseinrichtung 76, mittels der eine an jedem Transportkasten K vorgesehene, den jeweiligen Transportkasten K identifizierende Markierung erfaßt werden kann. Im dargestellten Ausführungsbeispiel handelt es sich bei der Erkennungseinrichtung 76 um ein im Handel erhältliches Lesegerät (Barcode-Scanner), mittels dessen ein an jedem Transportkasten K angebrachter Strichcode 78 als Markierung erfaßbar ist. Genauer gesagt hat hier jeder Transportkasten K eine geeignete Aufnahme, in die ein schriftlicher Fertigungsauftrag 80 eingesteckt werden kann, der u.a. den Strichcode 78 trägt.

Ebenso wie der Speicher 38 und die Fördereinrichtung 40 des Containers 10 ist die Erkennungseinrichtung 76 auf geeignete, in Fig. 1 nicht gezeigte Weise mit der Steuereinrichtung 74 wirkverbunden, so daß mittels der Erkennungseinrichtung 76 erfaßte Informationen betreffend die hier durch den Strichcode 78 erfolgte Markierung der Transportkästen K in der Steuereinrichtung 74 abgespeichert werden können. Im Ergebnis können der Speicher 38 und die Fördereinrichtung 40 des Containers 10 mittels der Steuereinrichtung 74 angesteuert werden, um auf entsprechende Anforderung hin, die z.B. manuell von einer Bedienperson über eine Tastatur (hier nicht gezeigt) am Container 10 oder automatisch von einer Arbeitsstation bzw. Bearbeitungsmaschine der Rezeptwerkstatt 12 in die Steuereinrichtung 74 eingegeben wird, unter Berücksichtigung der in der Steuereinrichtung 74 abgespeicherten Informationen betreffend die Markierung 78 der Transportkästen K einen bestimmten Transportkasten K aus dem Container 10 auszugeben.

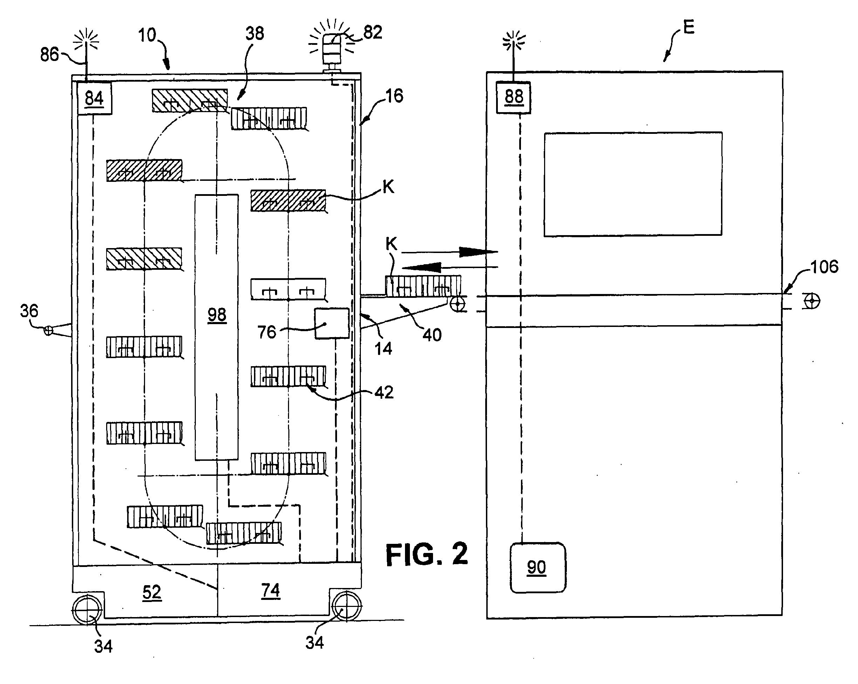

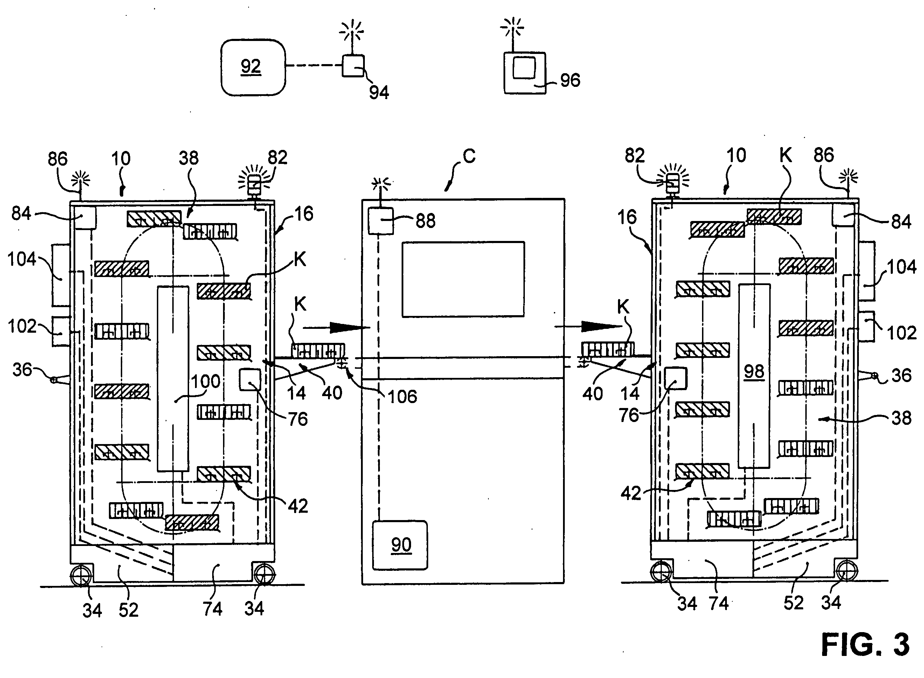

In den Fig. 2 und 3 sind Container 10 in weiteren Ausbaustufen in schematischer Weise dargestellt. Auch diese haben jeweils in einem geeignet, z.B. wie in Fig. 1 gezeigt ausgebildeten, über Rollen 34 bewegbaren Grundgestell 16 eine Einlager- und Ausgabeeinrichtung 14, welche einen Speicher 38 und eine Fördereinrichtung 40 aufweist, die wie unter Bezugnahme auf die Fig. 1 beschrieben ausgebildet sein können. Speicher 38 und Fördereinrichtung 40 sind auch hier ebenso wie eine Erkennungseinrichtung 76 zur Identifizierung der Transportkästen K über eine Steuereinrichtung 74 steuerungstechnisch miteinander verbunden. Die Versorgung dieser Komponenten mit elektrischem Strom erfolgt auch bei diesen Ausführungsbeispielen über einen Akkumulator 52 im Container 10.

Der Container 10 gemäß Fig. 2 weist verglichen mit dem Container 10 gemäß Fig. 1 drei zusätzliche Funktionskomponenten auf, die Container gemäß Fig. 3 gegenüber letzterem jeweils noch zwei weitere. Bevor nunmehr diese Funktionskomponenten näher beschrieben werden, sei schon an dieser Stelle darauf hingewiesen, daß diese Funktionskomponenten den jeweiligen Erfordernissen entsprechend einzeln oder in beliebiger Kombination an einem Container 10 vorgesehen sein können.

Zunächst haben die Container 10 gemäß den Fig. 2 und 3 eine Signaleinrichtung 82, die z.B. ein für den Füllstand des Containers 10 und/oder den Bearbeitungszustand der in den im Container 10 aufgenommenen Transportkästen K enthaltenen Brillengläser L repräsentatives Signal abgeben kann. In den dargestellten Ausführungsbeispielen handelt es sich bei der Signaleinrichtung 82 um eine mit der Steuereinrichtung 74 verbundene, mehrfarbige Meldeleuchte.

Des weiteren weisen die Container 10 gemäß den Fig. 2 und 3 eine mit der jeweiligen Steuereinrichtung 74 wirkverbundene Sende- und Empfangseinrichtung 84 mit zugehöriger Antenne 86 auf. Bei dem Ausführungsbeispiel gemäß Fig. 2 kann der Container 10 mittels der Sende- und Empfangseinrichtung 84 mit der jeweiligen Arbeitsstation der Rezeptwerkstatt 12, hier der Bearbeitungsmaschine E zur Vorbearbeitung der Brillengläser L kommunizieren, etwa damit die Arbeitsstation vom Container 10 einen bestimmten Auftrag, d.h. Transportkasten K anfordern oder aber der Container 10 der Arbeitsstation zu einem bestimmten, noch auszugebenden oder bereits ausgegebenen Transportkasten K Bearbeitungsdaten betreffend die darin enthaltenen Brillengläser L mitteilen kann. Die jeweilige Arbeitsstation hat demgemäß ebenfalls eine Sende- und Empfangseinrichtung 88, die mit einer Steuereinrichtung 90 der Arbeitsstation verbunden ist. Neben der Kommunikation zwischen Container 10 und jeweiliger Arbeitsstation kann der Container 10 gemäß Fig. 3 zu weiteren Fertigungssteuerungszwecken auch mit einem Host-Steuerungssystem 92 der Rezeptwerkstatt 12 kommunizieren, welches hierzu ebenfalls mit einer Sende- und Empfangseinrichtung 94 ausgerüstet ist. In diesem Zusammenhang zeigt Fig. 3 schließlich auch ein optionales Handgerät (PDA) 96, welches mit den Containern 10, den Arbeitsstationen der Rezeptwerkstatt 12 sowie deren Host-Steuerungssystem 92 zu Steuerungs- und/oder Überwachungszwecken kommunizieren kann.

Ferner hat der Container 10 gemäß Fig. 2 und der in Fig. 3 rechts dargestellte Container 10 ein handelsübliches Kühlaggregat 98 zur Kühlung der in den im Container 10 aufgenommenen Transportkästen K enthaltenen Brillengläser L durch Kühlung der Luft im Inneren des Containers 10. Hiermit kann z.B. die Verweilzeit nach dem Blocken der Brillengläser L verkürzt werden, indem durch die Kühlung die Erstarrung des Füllmaterials zwischen Blockstück und Brillenglasrohling beschleunigt wird. Dabei kann das Kühlaggregat 98 derart regelbar ausgestaltet sein, daß die Abkühlzeiten und/oder -temperaturen etwa für unterschiedliche Füll- oder Brillenglasmaterialien verschieden gewählt werden können.

Anstelle eines Kühlaggregats hat der in Fig. 3 links dargestellte Container 10 eine Trocknungseinheit 100 zur Trocknung der in den im Container 10 aufgenommenen Transportkästen K enthaltenen Brillengläser L. Als Trocknungseinheit 100 kann z.B. eine im Handel erhältliche elektrische Heizung mit Gebläse eingesetzt werden. Die Trocknungseinheit 100 dient beispielsweise dazu, den vor dem Blocken auf die bereits fertig bearbeitete, optisch wirksame Fläche der Brillengläser L aufgebrachten Schutzlack zu trocknen. Anzumerken ist hier noch, daß das Kühlaggregat 98 sowie die Trocknungseinheit 100 vorteilhaft innerhalb der Paternoster-Schleife des Speichers 38 angeordnet sind.

Als weitere Funktionskomponenten haben die Container 10 gemäß Fig. 3 noch eine Eingabeeinrichtung 102, etwa in Form einer Tastatur, sowie eine Anzeigeeinrichtung 104, z.B. ein LCD-Display, welche mit der Steuereinrichtung 74 des Containers 10 verbunden sind und über die beispielsweise Bearbeitungsdaten für die im Container 10 eingelagerten oder einzulagernden Aufträge, d.h. Transportkästen K eingegeben, abgefragt bzw. angezeigt werden können.

Die Fig. 2 und 3 veranschaulichen schließlich auch, wie die Container 10 an den Arbeitsstationen der Rezeptwerkstatt 12 eingesetzt werden können. Während in Fig. 2 durch die horizontalen Pfeile angedeutet ist, daß der jeweilige Auftrag, d.h. Transportkasten K aus dem Container 10 über eine Fördereinrichtung 106 der Arbeitsstation E ausgeschleust und nach der Bearbeitung der Brillengläser L an der Arbeitsstation dieser Transportkasten K wieder im gleichen Container 10 eingelagert wird, zeigt die Fig. 3 (siehe wiederum die horizontalen Pfeile), daß der jeweilige Auftrag, d.h. Transportkasten K über die Fördereinrichtung 106 der Arbeitsstation C aus dem in Fig. 3 linken Container 10 ausgeschleust und dieser Transportkasten K sodann nach der Bearbeitung der Brillengläser L an der Arbeitsstation C in den in Fig. 3 rechten Container 10 eingelagert wird.

Die Fig. 4 stellt beispielhaft das Layout einer Rezeptwerkstatt 12 dar, in der die oben beschriebenen Container 10 eingesetzt werden. Hinsichtlich der Funktion der einzelnen Arbeitsstationen A bis H der Rezeptwerkstatt 12 kann an dieser Stelle der Einfachheit halber zunächst auf die Beschreibungseinleitung verwiesen werden. Der Hauptmaterialfluß zwischen den Arbeitsstationen A bis H ist in Fig. 4 durch Pfeile angedeutet.

In dem hier dargestellten Layoutbeispiel werden zwei verschiedene Containertypen verwendet, zum einen Container ohne Kühlaggregat -- beziffert mit 10 -- zum anderen Container mit Kühlaggregat -- beziffert mit 10'. Während die Container 10 in fast allen Bereichen der Rezeptwerkstatt 12 verwendet werden, werden die Container 10' lediglich im Bereich zwischen der Blockstation C und der Vorbearbeitungsstation E verwendet, um ein schnelles Abkühlen der geblockten Brillengläser L zu ermöglichen. Diese etwas aufwendigeren Container 10' zirkulieren also zwischen der Fertigteilseite der Blockstation C und der Rohteilseite der Vorbearbeitungsstation E. Um eine ausreichende Festigkeit des Blockmaterials zu gewährleisten, ist zwischen der Blockstation C und der Vorbearbeitungsstation E eine Pufferzone D vorgesehen, in der die Container 10' verweilen und abkühlen können.

Die einzelnen Arbeitsstationen A bis H der Rezeptwerkstatt 12 sind nun wie folgt flexibel mittels der Container 10, 10' verkettet:

Bei A werden Transportkästen K aus einem Halbzeuglager 108 mit halbfertigen Brillengläsern L entsprechend dem Rezeptauftrag bestückt. Diese Transportkästen K werden in einen Container 10 eingelagert.

Sobald ein Container 10 befüllt ist, wird dieser an der Rohteilseite der Schutzfolienstation B (Taping) angedockt, die wie z.B. in der DE 199 25 087 C2 beschrieben ausgebildet sein kann. Alternativ kann hier auch eine Schutzlackierstation vorgesehen sein. Ein Leercontainer 10 steht zur Aufnahme der Transportkästen K mit fertig beschichteten Brillengläsern L an der gegenüberliegenden Seite der Schutzfolienstation B. Die Schutzfolienstation B selbst arbeitet vollautomatisch und besitzt hierfür eine eigene Ladeeinrichtung mit Band (nicht gezeigt).

Sobald dieser Container 10 mit Transportkästen K mit fertig beschichteten Brillengläsern L gefüllt ist, wird er von einer Bedienperson zur Rohteilseite der Blockstation C gebracht. Das Blocken erfolgt entweder manuell oder vollautomatisch. An der Blockstation C befindet sich auf der Fertigteilseite ein leerer Container 10' mit integriertem Kühlaggregat, um die Transportkästen K mit den fertig aufgeblockten Brillengläsern L aufzunehmen.

Ist dieser Container 10' vollständig gefüllt, wird der Container 10' nach einer etwaigen Zwischenlagerung in der Puffer- bzw. Wartezone D der Vorbearbeitungsstation E an deren Rohteilseite zugeführt. Die Vorbearbeitungsstation E arbeitet üblicherweise vollautomatisch und besitzt hierfür ein eigenes Ladesystem 110 mit Fließband zum Zu- und Abführen der Transportkästen K. Auf der Fertigteilseite der Vorbearbeitungsstation E ist ein leerer Container 10 angedockt, um die Transportkästen K mit den fertig vorbearbeiteten Brillengläsern L aufzunehmen.

Sobald auch dieser Container 10 gefüllt ist, wird er von einer Bedienperson zu der Bereitstellungsstation F gebracht, in der jedem Transportkasten K die entsprechenden Werkzeuge zur Fertigbearbeitung, d.h. Feinschleif- und/oder Polierbearbeitung aus einem Werkzeugspeicher 112 beigelegt werden.

Nachdem alle Transportkästen K mit den erforderlichen Fertigbearbeitungswerkzeugen bestückt sind, wird dieser Container 10 zur Rohteilseite der Fertigbearbeitungsstation G gebracht, die im dargestellten Layoutbeispiel mehrere Poliermaschinen aufweist. Die Transportkästen K werden den Poliermaschinen nacheinander zugeführt. Die Bedienperson legt Werkzeug und Brillenglas L in die Poliermaschine ein und startet diese. Üblicherweise ist das Einlegen der Brillengläser L und Werkzeuge in die Feinschleif- oder Poliermaschinen nicht automatisiert, grundsätzlich ist dies jedoch auch möglich. Die fertig bearbeiteten Brillengläser L werden sodann mitsamt der Werkzeuge wieder in ihren Transportkasten K zurückgelegt und dieser wird in einem leeren Container 10 eingelagert.

Sobald dieser Container 10 wiederum gefüllt ist, wird er zur Abblockstation H gebracht, in der die Brillengläser L von den Blockstücken getrennt werden. Von hier aus werden die Brillengläser L den weiteren Reinigungs- und Veredelungsprozessen zugeführt. Die Blockstücke, Werkzeuge und Transportkästen K werden schließlich kurz gereinigt, bevor sie zu ihrer Ausgangsstation (Blockstation C, Werkzeugspeicher 112 bzw. Transportkastenregal) zurückgebracht werden.

Es wird ein Container für eine Produktionsstätte zur Fertigung von individuellen Brillengläsern nach Rezept, kurz Rezeptwerkstatt, offenbart, die eine Mehrzahl von Arbeitsstationen aufweist, zwischen denen die Brillengläser mittels Transportkästen transportierbar sind, welche jeweils zur Aufnahme eines rechten und eines linken Brillenglases sowie ggf. zugehöriger Bearbeitungswerkzeuge ausgebildet sind. Erfindungsgemäß ist der Container zur Aufnahme einer Mehrzahl von Transportkästen ausgebildet, um diese zwischen wenigstens zwei Arbeitsstationen der Rezeptwerkstatt zu transportieren, wobei der Container eine Einlager- und Ausgabeeinrichtung für die Transportkästen aufweist, mittels der die Transportkästen in den Container einlagerbar sind und wahlweise ein bestimmter Transportkasten aus dem Container ausgebbar ist. Die Erfindung umfaßt auch die Verwendung des erfindungsgemäßen Containers in einer Rezeptwerkstatt. Im Ergebnis wird ein Logistiksystem für eine Rezeptwerkstatt geschaffen, mittels dessen ein optimierter Materialfluß der Transportkästen flexibel und weitestgehend unabhängig von der Größe der Rezeptwerkstatt und deren baulichen Gegebenheiten gewährleistet werden kann.

### Bezugszeichenliste

- 10, 10': Container
- 12: Rezeptwerkstatt
- 14: Einlager- und Ausgabeeinrichtung
- 16: Grundgestell
- 18: Rahmenprofil
- 20: Rahmenprofil
- 22: Bodenplatte
- 24: Rahmenprofil
- 26: Rahmenprofil
- 28: Deckplatte
- 30: Längsstrebe
- 32: Querstrebe
- 34: Rolle
- 36: Handgriff
- 38: Speicher
- 40: Fördereinrichtung
- 42: Aufnahmeboden
- 44: Führung
- 46: Antriebsmotor
- 48: Winkelgetriebe
- 50: Antriebsritzel
- 52: Akkumulator
- 54: Seitenflanke
- 56: Stift
- 58: Tragplatte
- 60: Führungsleiste
- 62: Längsförderer
- 64: Greifereinrichtung
- 66: Portal
- 68: Greiferantrieb
- 70: Greifer
- 72: Lineareinheit
- 74: Steuereinrichtung
- 76: Erkennungseinrichtung
- 78: Strichcode
- 80: Fertigungsauftrag
- 82: Signaleinrichtung
- 84: Sende- und Empfangseinrichtung
- 86: Antenne
- 88: Sende- und Empfangseinrichtung
- 90: Steuereinrichtung
- 92: Host-Steuerungssystem
- 94: Sende- und Empfangseinrichtung
- 96: Handgerät (PDA)
- 98: Kühlaggregat
- 100: Trocknungseinheit
- 102: Eingabeeinrichtung
- 104: Anzeigeeinrichtung
- 106: Fördereinrichtung
- 108: Halbzeuglager
- 110: Ladesystem
- 112: Werkzeugspeicher

- A - H: Arbeitsstationen gemäß Beschreibung
- K: Transportkasten
- L: Brillenglas

## Patentansprüche

1. Container (10) für eine Produktionsstätte (12) zur Fertigung von individuellen Brillengläsern (L) nach Rezept, die eine Mehrzahl von Arbeitsstationen (A - H) aufweist, zwischen denen die Brillengläser (L) mittels Transportkästen (K) transportierbar sind, welche jeweils zur Aufnahme eines rechten und eines linken Brillenglases (L) sowie ggf. zugehöriger Bearbeitungswerkzeuge ausgebildet sind, **dadurch gekennzeichnet, daß** der Container (10) zur Aufnahme einer Mehrzahl von Transportkästen (K) ausgebildet ist, um diese zwischen wenigstens zwei Arbeitsstationen (A - H) der Produktionsstätte (12) zu transportieren, wobei der Container (10) eine Einlager- und Ausgabeeinrichtung (14) für die Transportkästen (K) aufweist, mittels der die Transportkästen (K) in den Container (10) einlagerbar sind und wahlweise ein bestimmter Transportkasten (K) aus dem Container (10) ausgebbar ist.

2. Container (10) nach Anspruch 1, **dadurch gekennzeichnet, daß** die Einlager- und Ausgabeeinrichtung (14) einen Speicher (38) für die Transportkästen (K) hat.

3. Container (10) nach Anspruch 2, **dadurch gekennzeichnet, daß** der Speicher (38) durch einen Umlaufförderer ausgebildet ist, mittels dessen mehrere Aufnahmeböden (42) für jeweils wenigstens einen Transportkasten (K) paternosterartig im Kreis geführt sind.

4. Container (10) nach Anspruch 2 oder 3, **dadurch gekennzeichnet, daß** die Einlager- und Ausgabeeinrichtung (14) eine Fördereinrichtung (40) aufweist, mittels der ein Transportkasten (K) von einer äußeren Position am Container (10) in eine innere Endposition im Speicher (38) des Containers (10) und umgekehrt bewegbar ist.

5. Container (10) nach Anspruch 4, **dadurch gekennzeichnet, daß** die Fördereinrichtung (40) einen Längsförderer (62) hat, mittels dessen ein Transportkasten (K) von der äußeren Position am Container (10) in eine innere Zwischenposition im Container (10) und umgekehrt bewegbar ist, und eine Greifereinrichtung (64) aufweist, mittels der der Transportkasten (K) von der inneren Zwischenposition im Container (10) in die innere Endposition im Speicher (38) des Containers (10) und umgekehrt bewegbar ist.

6. Container (10) nach einem der vorhergehenden Ansprüche, **dadurch gekennzeichnet, daß** die Einlager- und Ausgabeeinrichtung (14) eine Erkennungseinrichtung (76) aufweist, mittels der eine an jedem Transportkasten (K) vorgesehene, den jeweiligen Transportkasten (K) identifizierende Markierung (78) erfaßbar ist.

7. Container (10) nach Anspruch 6, **dadurch gekennzeichnet, daß** es sich bei der Erkennungseinrichtung (76) um ein Lesegerät handelt, mittels dessen ein an jedem Transportkasten (K) angebrachter Strichcode (78) erfaßbar ist.

8. Container (10) nach mindestens den Ansprüchen 2, 4 und 6, **gekennzeichnet durch** eine mit dem Speicher (38) und der Fördereinrichtung (40) wirkverbundene Steuereinrichtung (74), die ihrerseits mit der Erkennungseinrichtung (76) wirkverbunden ist und in der mittels der Erkennungseinrichtung (76) erfaßte Informationen betreffend die Markierung (78) der Transportkästen (K) abspeicherbar sind, wobei der Speicher (38) und die Fördereinrichtung (40) mittels der Steuereinrichtung (74) ansteuerbar sind, um auf entsprechende Anforderung hin unter Berücksichtigung der in der Steuereinrichtung (74) abgespeicherten Informationen betreffend die Markierung (78) der Transportkästen (K) einen bestimmten Transportkasten (K) aus dem Container (10) auszugeben.

9. Container (10) nach Anspruch 8, **gekennzeichnet durch** eine mit der Steuereinrichtung (74) wirkverbundene Sende- und Empfangseinrichtung (88) für eine Kommunikation zwischen dem Container (10) einerseits und einer Arbeitsstation (A - H) und/oder einem Host-Steuerungssystem (92) der Produktionsstätte (12) andererseits.

10. Container (10) nach einem der vorhergehenden Ansprüche, **gekennzeichnet durch** eine Signaleinrichtung (82) für den Füllstand des Containers (10) und/oder den Bearbeitungszustand der in den im Container (10) aufgenommenen Transportkästen (K) enthaltenen Brillengläser (L).

11. Container (10) nach einem der vorhergehenden Ansprüche, **gekennzeichnet durch** ein Kühlaggregat (98) zur Kühlung der in den im Container (10) aufgenommenen Transportkästen (K) enthaltenen Brillengläser (L).

12. Container (10) nach einem der vorhergehenden Ansprüche, **gekennzeichnet durch** eine Trocknungseinheit (100) zur Trocknung der in den im Container (10) aufgenommenen Transportkästen (K) enthaltenen Brillengläser (L).

13. Container (10) nach einem der vorhergehenden Ansprüche, **gekennzeichnet durch** eine Energieversorgungseinheit (52) für die im Container (10) vorhandenen Energieverbraucher.

14. Container (10) nach einem der vorhergehenden Ansprüche, **dadurch gekennzeichnet, daß** der Container (10) rollbar ist, wozu der Container (10) mit einer Mehrzahl von Rädern oder Rollen (34) ausgerüstet ist.

15. Verfahren zur Fertigung von individuellen Brillengläsern (L) nach Rezept in einer Produktionsstätte (12) mit einer Mehrzahl von Arbeitsstationen (A - H), bei dem die Brillengläser (L) ggf. zusammen mit zugehörigen Bearbeitungswerkzeugen zwischen den Arbeitsstationen (A - H) mittels Transportkästen (K) transportiert werden, welche jeweils zur Aufnahme eines rechten und eines linken Brillenglases (L) sowie ggf. der zugehörigen Bearbeitungswerkzeuge ausgebildet sind, **dadurch gekennzeichnet, daß** die Transportkästen (K) zwischen wenigstens zwei Arbeitsstationen (A - H) der Produktionsstätte (12) mittels eines Containers (10) nach einem der vorhergehenden Ansprüche transportiert werden.
